# EUROPEAN PATENT APPLICATION

(11) **EP 2 637 105 A1**
(43) Date of publication of application: **11.09.2013**
(21) Application number: 11844441.3
(22) Date of filing: 05.12.2011
(51) Int. Cl.: G06F 13/40

(54) **COMMUNICATION DEVICE, METHOD AND SYSTEM**

(30) Priority: 03.12.2010 CN 201010573245
(71) Applicant: Huawei Technologies Co., Ltd., Shenzhen, Guangdong 518129 (CN)
(72) Inventor: JIA, Xiaoqiong, Shenzhen Guangdong 518129 (CN); ZHANG, Guanzhong, Shenzhen Guangdong 518129 (CN)
(74) Representative: Pfenning, Meinig & Partner GbR
(86) International application number: PCT/CN2011/083481
(87) International publication number: WO 2012/072052

(57) **Abstract**

Embodiments of the present invention disclose a communication device, and further provide a corresponding communication method. In the communication device, a control unit is configured to instruct a universal input interface to refuse to receive information when a universal output interface sends information; and instruct the universal output interface to maintain a closed state when the universal input interface receives information or when the universal output interface does not send information; the universal output interface is configured to maintain the closed state according to the instruction of the control unit when not sending information or when the universal input interface receives information; and the universal input interface is configured to refuse to receive information according to the instruction of the control unit when the universal output interface sends information. According to the communication device of the embodiments of the present invention, no external extended component is added; the structure of the communication device is simple, and line reliability of the communication device is not affected.

## Description

This application claims priority to Chinese Patent Application No. 201010573245.5, filed with the Chinese Patent Office on December 3, 2010 and entitled "COMMUNICATION DEVICE, COMMUNICATION METHOD, AND COMMUNICATION SYSTEM", which is incorporated herein by reference in its entirety.

### TECHNICAL FIELD

The present invention relates to the field of communication technologies, and in particular, to a communication device, a communication method, and a communication system.

### BACKGROUND

In a control component, a universal interface is required to simulate a communication interface, for example, the universal interface is used to simulate an inter-integrated circuit (I2C, Inter-Integrated Circuit) interface and an Ethernet PHY management (MDIO, Management Data Input Output) interface, and then the simulated interfaces are used to operate external communication peer having same interface function.

For example, in a 10 Gigabit Ethernet, usually an MPC8548E processor and a PM8358 transceiver are used. The MPC8548E processor determines the working state of the PM8358 transceiver and controls the PM8358 transceiver by reading a register of the PM8358 transceiver with an MDIO bus. However, the MDIO interface of the MPC8548E is defined by the IEEE in the IEEE 802.3 Clause 22 Specification, while the register of the PM8358 and used in the Ethernet is defined by the IEEE in the IEEE 802.3 Clause 45 Specification, that is, the MDIO interface of the MPC8548E does not support the interface protocol of the MDIO interface of the PM8358, so that the MPC8548E cannot read or write the register of the PM8358 through the MDIO bus.

The prior art implements bidirectional communication between two components by using an interface-extended functional unit, for example, using interface-extended functional units such as a field programmable gate array or a complex programmable logic controller. The specific implementation may be: By interface extensions, the field programmable gate array sets up interfaces that can support the MDIO interface protocols of the MPC8548E and PM8358 respectively; when the MPC8548E needs to read state information of the register of the PM8358, the MPC8548E first controls the field programmable gate array to read the state information of the register of the PM8358, and then the MPC8548E reads the required information from the field programmable gate array; when the MPC8548E needs to control the PM8358, the MPC8548E first writes control information into the field programmable gate array, and then the field programmable gate array writes the control information to the register of the PM8358.

The solution provided in the prior art not only increases the cost but also reduces line reliability and occupies resources of an external extended component. As a result, the efficiency of executing operations by the external extended component itself is affected.

### SUMMARY

Embodiments of the present invention provide a communication device, a communication method, and a communication system, which can implement bidirectional communication simply and reliably.

An embodiment of the present invention provides a communication device, including: a control unit, configured to instruct a universal input interface to refuse to receive information when a universal output interface sends information; and instruct the universal output interface to maintain a closed state when the universal input interface receives information or when the universal output interface does not send information; the universal output interface, configured to maintain the closed state according to the instruction of the control unit when not sending information or when the universal input interface receives information; and the universal input interface, configured to refuse to receive information according to the instruction of the control unit when the universal output interface sends information.

An embodiment of the present invention further provides a communication method, including: sending, by a universal output interface in a communication device, information, and refusing, by a universal input interface in the communication device, to receive information when the universal output interface sends information; and receiving, by the universal input interface in the communication device, information, and maintaining, by the universal output interface, a closed state when the universal input interface receives information or when the universal output interface does not send information.

An embodiment of the present invention further provides a communication system, including any communication device provided by the embodiments of the present invention.

According to the solutions provided by the embodiments of the present invention, the control unit in the communication device controls the universal output interface and the universal input interface, so that the unidirectional universal input interface and universal output interface in the communication device can implement the function of a bidirectional communication interface. In addition, according to the communication device in the embodiments, bidirectional communication can be implemented without adding any external extended component; the structure of the communication device is simple. Therefore, the cost of the product can be reduced, while line reliability of the communication device is not affected.

### BRIEF DESCRIPTION OF DRAWINGS

FIG. 1 is a schematic structural diagram of an embodiment of a communication device according to an embodiment of the present invention;

FIG. 2 is a schematic flowchart of another embodiment of a communication method according to an embodiment of the present invention;

FIG. 3 is a schematic flowchart of another embodiment of a communication method according to an embodiment of the present invention;

FIG. 4 is a time sequence diagram of sending information in another embodiment of a communication method according to an embodiment of the present invention; and

FIG. 5 is a time sequence diagram of reading information in another embodiment of a communication method according to an embodiment of the present invention.

### DESCRIPTION OF EMBODIMENTS

Embodiments of the present invention provide a communication device, and further provide a corresponding communication method and communication system, which are respectively described in detail hereinafter.

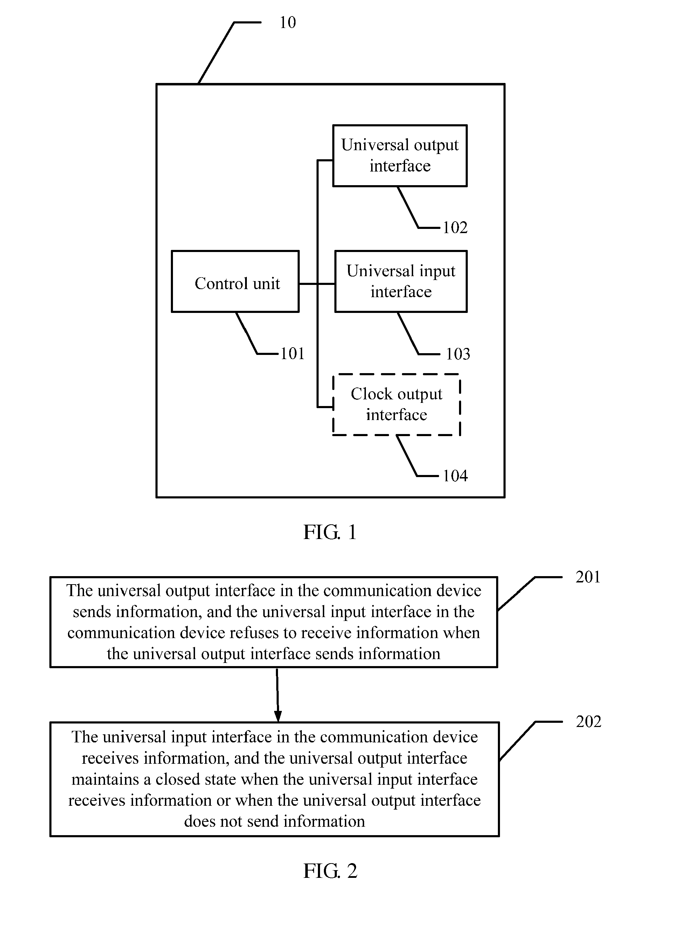

An embodiment of the present invention provides an embodiment of a communication device. As shown in FIG. 1, the communication device 10 includes:
a control unit 101, configured to instruct a universal input interface 103 to refuse to receive information when a universal output interface 102 sends information; and instruct the universal output interface 102 to maintain a closed state when the universal input interface 103 receives information or when the universal output interface 102 does not send information; the universal output interface 102, configured to maintain the closed state according to the instruction of the control unit 101 when not sending information or when the universal input interface 103 receives information; and the universal input interface 103, configured to refuse to receive information according to the instruction of the control unit 101 when the universal output interface 102 sends information. The control unit 101 is connected to the universal output interface 102 and the universal input interface 103 respectively.

In the communication device provided by the embodiment of the present invention, the control unit 101 controls the universal output interface 102 and the universal input interface 103, so that the unidirectional universal input interface and universal output interface in the communication device can implement the function of a bidirectional communication interface. In addition, according to the communication device in the embodiment of the present invention, bidirectional communication can be implemented without adding any external extended component; the structure of the communication device is simple. Therefore, the cost of the product can be reduced, while line reliability of the communication device is not affected.

In the embodiment of the present invention, the universal output interface 102 and universal input interface 103 of the control unit 101 in the communication device 10 may be connected to a bidirectional input and output interface of another communication peer that performs communication with the communication device. In the embodiment of the present invention, the communication device 10 may be a controller or a processor.

As shown in FIG. 1, the communication device 10 provided by the embodiment of the present invention may further include a clock output interface 104, where the clock output interface 104 is connected to the control unit 101. The control unit 101 may further instruct the clock output interface 104 to send a clock signal before instructing the universal output interface 102 to send information or before the universal input interface 103 receives information. The clock output interface 104 may send clock information according to the instruction of the control unit 101. Thereby, according to the clock signal, the communication peer that performs communication with the communication device 10 synchronously receives the information sent by the universal output interface 102, or the communication peer synchronously outputs information according to the clock signal. The control unit 101 may be further configured to instruct the clock output interface 104 to output a low level when an information line is in an idle state. The clock output interface of the communication device 10 may be connected to a clock input interface of the communication peer. In the embodiment of the present invention, the clock output interface 104 may be an interface specially set for outputting a clock signal, or may be simulated by other universal output interface in the communication device 10.

In the embodiment of the present invention, the control unit 101 may control, in the following way, the universal output interface 102 to maintain the closed state when the universal output interface 102 does not send information, for example, if the universal output interface 102 has tristate output, the control unit 101 may instruct the universal output interface 102 to output high resistance, so that the universal output interface 102 maintains the closed state. Or, if the universal output interface 102 has no tristate output, and a dropping resistor is connected to the universal output interface 102 in series, the control unit 101 may instruct the universal output interface 102 to output a high level, so that the universal output interface 102 maintains the closed state. Usually, the resistance value of the dropping resistor may be obtained by debugging, or obtained according to emulation according to an actual requirement. For persons skilled in the art, A debugging method or an emulation method for obtaining a resistance value of a dropping resistor in the prior art may be referred. In the embodiment of the present invention, for example, the resistance value of the dropping resistor connected to the universal output interface 102 in series may be set to 100 ohms, where the resistance value of 100 ohms is only an example provided by the embodiment of the present invention. In the embodiment of the present invention, the resistance value is not limited thereto, and may be determined according to an actual condition.

In the embodiment of the present invention, when the information sent by the universal output interface 102 or the information received by the universal input interface 103 is byte data, the control unit 101 may be further configured to instruct, before instructing the output interface 102 to send information, the universal output interface 102 to send a write command to the communication peer that performs communication with the communication device 10, so that the work mode of the communication peer is receiving byte data; or before the universal input interface 103 receives information, instruct the universal output interface 102 to send a read command to the communication peer that performs communication with the communication device 10, so that the work mode of the communication peer is outputting byte data.

As shown in FIG. 2, an embodiment of the present invention further provides a communication method. The communication device in the embodiment shown in FIG. 1 may be used to implement the method provided by the embodiment of the present invention. The unidirectional universal input interface and universal input interface in the communication device implement the function of a bidirectional communication interface, and perform bidirectional communication between the communication device and the communication peer. The method includes:

201. The universal output interface in the communication device sends information, and the universal input interface in the communication device refuses to receive information when the universal output interface sends information.

202. The universal input interface in the communication device receives information, and the universal output interface maintains a closed state when the universal input interface receives information or when the universal output interface does not send information.

In the embodiment of the present invention, no mandatory sequence exists between step 201 and step 202, that is, there is no fixed sequence for the communication device to send information and receive information, and the communication device performs information reception and transmission with the terminal according to an actual condition.

In the communication method provided by the embodiment of the present invention, the unidirectional universal input interface and universal output interface in the communication device can implement the function of a bidirectional communication interface, and the bidirectional communication between the communication device and the communication peer is implemented. In addition, in the process of implementing the method, the implementation is simple without adding any extra extended component, which can reduce the cost of the product of the communication device implementing the method and does not affect line reliability of the communication process.

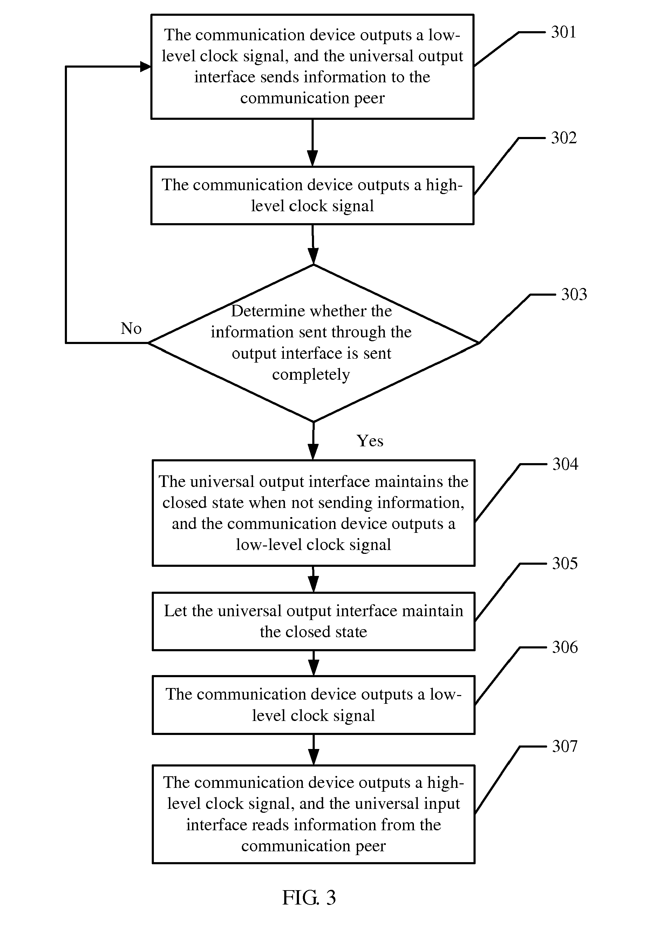

As shown in FIG. 3, an embodiment of the present invention further provides a communication method. In this embodiment, the communication device provided by the embodiment shown in FIG. 1 may implement the communication method. A communication peer that performs communication with the communication device may perform a read operation and a write operation by using a clock state output by the communication device, and the method includes:

301. The communication device outputs a low-level clock signal, and the universal output interface in the communication device sends information to the communication peer.

In this embodiment, the clock output interface in the communication device may output the low-level clock signal.

In this embodiment, the universal output interface may synchronously send information to the communication peer when outputting the low-level clock signal. Or, after outputting the low-level clock signal, the universal output interface sends information to the communication peer when a clock line is in an idle state (at this time, the idle state of the clock line is a low-level state).

In this embodiment, when the information sent by the universal output interface to the communication peer is byte (Byte) data, before the universal output interface sends byte data, the universal output interface may send a write command to the communication peer, so that the work mode of the communication peer is receiving byte data. After the universal output interface sends the write command completely, the communication device may generate data of one byte on the information line within the next several clock periods (one-bit (bit) data is output within each clock period); after the communication peer receives an operation command specifying a write operation, the communication peer synchronously receives, according to the same clock period on the information line, byte data sent by the universal output interface of the communication device, where one-bit data is received within one clock period.

In this embodiment, after sending information or sending the clock signal, the communication device may have a delay and then execute the operation of the next step. Thereby, the sent information on the information line or the sent clock signal on the clock signal line is stable, and the communication peer has sufficient time to receive the information or clock signal sent by the communication device, where the length of the delay may be decided by the internal hardware structure of the communication peer.

In this step of this embodiment, the communication device may also first output a high-level clock signal.

302. The communication device outputs a high-level clock signal.

After sending information, the universal output interface of the communication device outputs a high-level clock signal, that is, generates a rising edge of the clock signal.

After receiving the high-level clock signal output by the communication device, that is, after sampling the rising edge of the clock signal, the communication peer may synchronously receive from the information line the information sent by the communication device.

303. The communication device determines whether the information sent through the output interface is sent completely, and if the information is not sent completely, performs step 301, or if the information is sent completely, performs step 304.

In step 302, after outputting the high-level clock signal, the communication device may determine whether the information sent through the universal output interface is sent completely. For example, the information is byte data, and in this case, a stop byte is usually added at the end bit of the byte data when byte data is sent. The communication device may determine, according to whether the stop byte is sent, whether the byte data is sent completely.

When the information is not sent completely, the communication device may perform step 301 to repeat the preceding steps until all information is sent completely.

304. The universal output interface of the communication device maintains the closed state when not sending information, and the communication device outputs a low-level clock signal.

After the information is sent completely, the universal output interface maintains the closed state when not sending information, and the communication device outputs a low-level clock signal, so that the clock state is a low-level state when the clock line is idle and the communication device does not execute any operation.

Step 301 to step 304 describe a process of sending information by the communication device to the communication peer. The following describes a process of reading information by the communication device from the communication peer. It should be noted that in the embodiment of the present invention, the two processes of reading information and sending information by the communication device may be performed independently.

305. The communication device lets the universal output interface maintain the closed state.

Before the universal input interface reads information from the communication peer, the universal output interface maintains the closed state when not sending information.

306. The communication device outputs a low-level clock signal.

The communication peer synchronously sends information to the communication device when knowing that the clock signal output by the communication device is a low level.

307. The communication device outputs a high-level clock signal, and the universal input interface of the communication device reads information from the communication peer.

In this embodiment, when the information read by the universal input interface of the communication device from the communication peer is byte (Byte) data, before the universal input interface reads byte data, the communication device may send a read command to the communication peer through the universal output interface, so that the work mode of the communication peer is sending byte data. Assuming that the byte data is 8-bit byte data, the communication peer may send byte data on the information line within 8 clock periods, where one-bit data is sent on the information line within one clock period, and the universal input interface of the communication device may read byte data from the information line within the same 8 clock periods.

In this embodiment, when the communication device outputs the high-level clock signal, the universal input interface of the communication device may synchronously read information from the communication peer; or after the communication device outputs the high-level clock signal, when the clock line is in the idle state (at this time, the idle state of the clock line is a high-level state), the universal input interface of the communication device may read information from the communication peer.

In this embodiment, the communication device outputs a low-level clock signal, and the universal input interface of the communication device reads information from the communication peer. No limitation is set in this embodiment, so long as the clock state of the clock signal output by the communication device is different from the clock state when the universal output interface sends information to the communication peer.

In this embodiment, after reading information, the universal input interface may have a delay and then execute the operation of the next step. Thereby, the communication device has sufficient time to read the information, where the specific length of the delay may be decided by the internal hardware structure of the communication device.

Similar to step 303, after reading information, the communication device may also determine whether the universal input interface reads the information completely, and if the information is not read completely, continue to output clock signals for changing the clock state. After sampling clock transitions, the communication peer sends data, and the universal input interface of the communication device continues to read data, and so on, until all information is read completely. If all information is read completely, the communication device outputs a low-level clock signal, so that the clock state is a low level when the clock line is in the idle state and the communication device does not execute any operation, and that the universal output interface maintains the closed state when not sending information.

In this embodiment, the universal output interface may be controlled, in the following way, to maintain the closed state when not sending information, for example, if the universal output interface has tristate output, the universal output interface may output high resistance, so that the universal output interface maintains the closed state. Or, when the universal output interface has no tristate output, a dropping resistor is connected to the universal output interface in series, and the universal output interface may output a high level, so that the universal output interface maintains the closed state. Both the two modes are simple and convenient, and maximally reduce the impact on line reliability of the communication process.

The following uses a specific example of implementing bidirectional communication between the communication device and the communication peer to describe the communication method provided by the embodiment of the present invention.

In the communication device, the universal output interface and the universal input interface are connected to the bidirectional input and output interface of the communication peer, where the universal output interface in the communication device has tristate output, and the clock output interface is connected to the clock input interface of the communication peer.

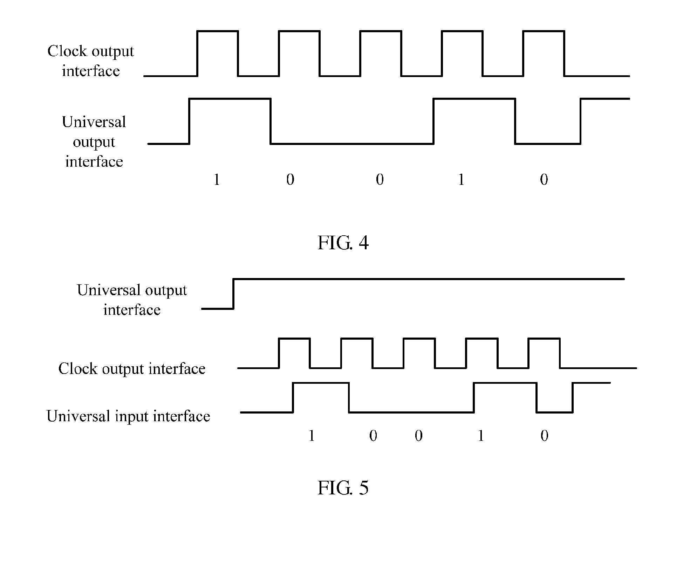

The following first describes a whole process of sending information by the communication device to the communication peer, assuming that the information is 5-bit binary data and that the data content is 10010. The universal output interface in the communication device sends 10010 to the communication peer one by one. FIG. 4 is a time sequence diagram of the whole process of sending the above information by the communication device to the communication peer. Referring to FIG. 4, the specific process is as follows:

The clock output interface outputs a low-level clock signal, and a delay operation is executed. When the delay operation is being executed, the clock line is in the idle state (in this case, the idle state of the clock line is a low-level state). After the delay operation ends, when the clock line is in the low level state, the universal output interface sends one-bit data 1 to the communication peer, and then the delay operation is executed. After the delay operation ends, the clock output interface outputs a high-level clock signal and still needs to execute a delay operation. When the delay operation is being executed, the clock line is in the idle state (in this case, the idle state of the clock line is a high-level state). After the delay operation ends, because the data is not sent completely, the clock output interface outputs a low-level clock signal and a delay operation is executed. After the delay operation ends, when the clock line is in the low level state, the universal output interface sends one-bit data 0 to the communication peer, and so on, until the data is sent completely. The clock output interface outputs a low-level clock signal and the universal output interface is set to output high resistance.

An embodiment of the present invention further describes a whole process of reading information by the communication device from the communication peer, assuming that the information is 5-bit binary data and that the data content is 10010, where the information is 5-bit data. The universal input interface of the communication device reads data from the communication peer one by one. FIG. 5 is a time sequence diagram of the whole process of reading the above information by the communication device from the communication peer. Referring to FIG. 5, the specific process is as follows:

The universal output interface is set to output high resistance; the clock output interface outputs a low-level clock signal, and a delay operation is executed. After the delay operation ends, the clock output interface outputs a high-level clock signal, and a delay operation is executed. After the delay operation ends, when the clock line is in the high level state, the universal input interface reads one-bit data 1 from the communication peer, and then a delay operation is executed. After the delay operation ends, because the data is not read completely, the clock output interface outputs a low-level clock signal and a delay operation is executed. After the delay operation ends, the universal output interface outputs a high-level clock signal and a delay operation is executed. After the delay operation ends, when the clock line is in the high level state, the universal input interface reads one-bit data 0 from the communication peer again, and so on, until the data is read completely. The clock output interface outputs a low-level clock signal and the universal output interface is set to output high resistance.

An embodiment of the present invention further provides a communication system, where the communication system may include the communication device provided by the embodiment shown in FIG. 1, and the communication device in the communication system may implement the above communication method embodiment.

Persons of ordinary skill in the art may understand that all or part of the steps of the method according to the embodiments may be implemented by a program instructing relevant hardware. The program may be stored in a computer readable storage medium, and the storage medium may be a read-only memory, a magnetic disk, or an optical disk, and so on.

The communication device, the communication method, and the communication system that are provided in the present invention are introduced in detail in the foregoing. Persons of ordinary skill in the art may make modifications to the specific implementation manners and application scopes according to the present invention. In conclusion, the content of the specification shall not be construed as a limitation to the present invention.

## Claims

1. A communication device, comprising:
a control unit, configured to instruct a universal input interface to refuse to receive information when a universal output interface sends information; and instruct the universal output interface to maintain a closed state when the universal input interface receives information or when the universal output interface does not send information;
the universal output interface, configured to maintain the closed state according to the instruction of the control unit when not sending information or when the universal input interface receives information; and
the universal input interface, configured to refuse to receive information according to the instruction of the control unit when the universal output interface sends information.

2. The communication device according to claim 1, further comprising a clock output interface, wherein:
the control unit is further configured to instruct the clock output interface to send a clock signal before instructing the universal output interface to send information or before the universal input interface receives information; and
the clock output interface is configured to send the clock signal according to the instruction of the control unit.

3. The communication device according to claim 1, wherein:
the control unit is further configured to instruct the universal output interface to send a write command before the universal output interface sends information; or
the control unit is further configured to instruct the universal output interface to send a read command before the universal input interface receives information.

4. The communication device according to claim 1, wherein:
if the universal output interface has tristate output, the control unit is further configured to instruct the universal output interface to output high resistance; or
if the universal output interface has no tristate output, the control unit is further configured to instruct the universal output interface to output a high level.

5. A communication method, comprising:
sending, by a universal output interface in a communication device, information, and refusing, by a universal input interface in the communication device, to receive information when the universal output interface sends information; and
receiving, by the universal input interface in the communication device, information, and maintaining, by the universal output interface, a closed state when the universal input interface receives information or when the universal output interface does not send information.

6. The method according to claim 5, further comprising:
sending, by the communication device, a clock signal before the universal output interface sends information or before the universal input interface receives information.

7. The method according to claim 6, wherein a clock output interface in the communication device sends the clock signal.

8. The method according to claim 5, wherein:
the universal output interface sends a write command before sending information; or
the universal output interface sends a read command before the universal input interface receives information.

9. The method according to any one of claims 5-8, wherein:
if the universal output interface has tristate output, the maintaining, by the universal output interface, a closed state, comprises: outputting, by the universal output interface, high resistance; or
if the universal output interface has no tristate output, the maintaining, by the universal output interface, a closed state, comprises: outputting, by the universal output interface, a high level.

10. A communication system, comprising the communication device according to any one of claims 1-4.
